# EUROPÄISCHE PATENTANMELDUNG

(11) **EP 3 985 297 A1**
(43) Veröffentlichungstag der Anmeldung: **20.04.2022**
(21) Anmeldenummer: 20201597.0
(22) Anmeldetag: 13.10.2020
(51) Int. Cl.: F16M 11/14, F16M 11/20, F16M 11/26, F16M 13/02

(54) **GELENKVERBINDUNG**

(71) Anmelder: Wernhart, Michael, 2640 Gloggnitz (AT); Baueregger, Otto, 2640 Gloggnitz (AT)
(72) Erfinder: Wernhart, Michael, 2640 Gloggnitz (AT); Baueregger, Otto, 2640 Gloggnitz (AT)
(74) Vertreter: SONN Patentanwälte OG

(57) **Zusammenfassung**

Gelenkverbindung (1) mit zumindest einem verstellbaren Gelenk (2), insbesondere Kugelgelenk (3) oder Scharniergelenk (26), wobei das zumindest eine Gelenk (2) aufweist:
ein erstes Gelenkteil (4) mit einem Aufnahmeelement (6), das eine vorzugsweise konkav gewölbte erste Kontaktfläche (7) besitzt;
ein zweites Gelenkteil (5) mit einem in das Aufnahmeelement (6) aufgenommenen Kopfelement (8), welches eine vorzugsweise konvex gewölbte zweite Kontaktfläche (9) besitzt, die von der ersten Kontaktfläche (7) zumindest teilweise umgeben ist;
wobei ein Seilelement (13) durch die erste (7) und die zweite Kontaktfläche (8) geführt ist und ein verstellbares Spannelement (14) zum Spannen des Seilelements (13) vorgesehen ist, sodass ein Anpressdruck (P) zwischen der ersten (7) und der zweiten Kontaktfläche (9) einstellbar ist.

## Beschreibung

Die Erfindung betrifft eine Gelenkverbindung mit zumindest einem verstellbaren Gelenk, insbesondere einem Kugelgelenk oder einem Scharniergelenk, wobei das zumindest eine Gelenk aufweist:
ein erstes Gelenkteil mit einem Aufnahmeelement, das eine vorzugsweise konkav gewölbte erste Kontaktfläche besitzt; und
ein zweites Gelenkteil mit einem in das Aufnahmeelement aufgenommenen Kopfelement, welches eine vorzugsweise konvex gewölbte zweite Kontaktfläche besitzt, die von der ersten Kontaktfläche zumindest teilweise umgeben ist.

Eine Gelenkverbindung mit einem oder mehreren verstellbaren Gelenken kann unter anderem dazu verwendet werden, ein Objekt, wie beispielsweise ein Werkzeug oder einen Gegenstand, im Raum auszurichten. Nach der Ausrichtung des Objekts soll dessen Orientierung auch bei allfälligen Krafteinwirkungen auf die Gelenke, wie sie etwa bei Berührungen der Gelenkverbindung oder durch das Gewicht des Objekts entstehen können, möglichst dauerhaft und zuverlässig erhalten bleiben. Andererseits sollen die Gelenke der Gelenkverbindung zur Ausrichtung des Objekts rasch und vor allem ohne großen Kraftaufwand verstellbar sein.

Aus dem Stand der Technik sind Kugelgelenke und Scharniergelenke bekannt. Beide Gelenktypen weisen typischerweise gewölbte Kontaktflächen auf, die dauerhaft in reibschlüssiger Verbindung miteinander stehen. Die Ausrichtung eines leichtgängigen Kugel- bzw. Scharniergelenks kann sich bei schweren Objekten oder Berührungen ungewollt ändern. Kugel- bzw. Scharniergelenke, die die Ausrichtung eines Objekts auch bei Krafteinwirkungen auf die Gelenke zuverlässig beibehalten, können hingegen in der Regel nur mit hohem Kraftaufwand verstellt werden. Aus dem Stand der Technik sind weiters Kugelgelenke bekannt, die z.B. mittels Drehen einer Schraube fixiert werden können. Weiters gibt es Konstruktionen, bei denen Spannfedern der Gewichtskraft von angefügten Objekten oder Werkzeugen entgegenwirken. Andere Konstruktionen nutzen Gegengewichte, um alle Kräfte auszutarieren und eine ungewollte Bewegung auch bei leichtgängigen Gelenkverbindungen zu vermeiden. Bei den Kugel- und Scharniergelenken aus dem Stand der Technik stehen somit die beiden eingangs beschriebenen Anforderungen, also die leichte Verstellbarkeit der Gelenke einerseits und das zuverlässige Beibehalten der Ausrichtung der Gelenke andererseits, einander entgegen.

Aus der US 3,266,059 A ist eine Gelenkverbindung mit mehreren Gelenken bekannt. Im Inneren der Gelenkverbindung ist eine elastische Feder angeordnet, die alle Gelenke miteinander verbindet. Die einzelnen Gelenke sind zwar prinzipiell zueinander verstellbar, durch die rückstellende Wirkung der Feder bleibt jedoch eine eingestellte Ausrichtung der Gelenke nur in unzureichender Weise erhalten. Je größer die einzelnen Winkel der Gelenkteile der einzelnen Gelenke zueinander sind, desto größer ist auch die rückstellende Kraft der Feder. Um die Gelenke zu verstellen sind zusätzliche Spannvorrichtungen im Randbereich der Gelenkverbindung der US 3,266,059 A vorgesehen. Um die Ausrichtung der einzelnen Gelenke entgegen der Wirkung der Feder beizubehalten, müssen die Spannvorrichtungen im Randbereich der Gelenkverbindung betätigt werden. Durch Ausrichtung der einzelnen Gelenke wird die Feder gedehnt und damit deren Länge erweitert. Die Längenänderung der Feder ist abhängig vom Winkel der einzelnen Gelenke zueinander. Je weiter die Gelenke zueinander gedreht werden, desto stärker wird die Feder gedehnt. Aus diesem Grund muss eine elastische Feder verwendet werden. Bei zu großen Winkeländerungen zwischen den Gelenken kann die Feder allerdings zu weit gedehnt und dadurch nachhaltig verformt werden. Durch Berührungen oder durch das Gewicht eines an die Gelenkverbindung angefügten Objekts kann die Ausrichtung der Gelenkverbindung der US 3,266,059 A leicht verändert werden. Die Gelenkverbindung der US 3,266,059 A ist demnach nicht hinreichend stabil. Des Weiteren sind die einzelnen Gelenke auf Grund der Dicke und Stärke der elastischen Feder nur in kleinen Winkelbereichen zueinander verstellbar.

Weitere Gelenkvorrichtungen sind beispielsweise aus der US 4,108,211 A und US 3,060,972 A bekannt.

Im Lichte dieser Ausführungen ist es Aufgabe der vorliegenden Erfindung, die Nachteile des Standes der Technik zu lindern oder gar gänzlich zu beseitigen. Insbesondere ist es Aufgabe der vorliegenden Erfindung, eine Gelenkverbindung mit zumindest einem Gelenk zur Verfügung zu stellen, die einerseits leichtgängig verstellbar ist und andererseits eine vorgenommene Ausrichtung zuverlässig beibehält.

Gelöst wird diese Aufgabe durch eine Gelenkverbindung nach Anspruch 1. Demnach ist bei einer Gelenkverbindung der eingangs erwähnten Art erfindungsgemäß ein Seilelement durch die erste und die zweite Kontaktfläche geführt und ein verstellbares Spannelement zum Spannen des Seilelements vorgesehen, sodass ein Anpressdruck zwischen der ersten und der zweiten Kontaktfläche einstellbar ist. Durch die Möglichkeit der Einstellung des Anpressdruckes kann dieser zur Ausrichtung des Gelenks verringert werden. Ist die Ausrichtung des Gelenks abgeschlossen, kann der Anpressdruck zwischen der ersten und zweiten Kontaktfläche durch Spannen des Seilelements mit Hilfe des Spannelements wieder erhöht werden, sodass die Ausrichtung des Gelenks bzw. der Gelenkverbindung in weiterer Folge zuverlässig erhalten bleibt. Mit der erfindungsgemäßen Gelenkverbindung können beispielsweise Werkzeuge oder Objekte, wie zum Beispiel Lampen oder Bildschirme, ausgerichtet und gehalten werden. Diese Werkzeuge und Objekte können mit der Gelenkverbindung verbunden werden, beispielsweise mit Hilfe einer noch näher zu beschreibenden Halteeinrichtung. Die erste und die zweite Kontaktfläche stehen in einem gespannten Zustand des Seilelements in reibschlüssiger Verbindung miteinander. Vorzugsweise ergibt sich, wenn die erste und die zweite Kontaktfläche in Kontakt sind, ein Haftreibungskoeffizient µ_{H} von zumindest 0,1, vorzugsweise zumindest 0,15, zumindest 0,4 oder zumindest 0,6, noch mehr bevorzugt zumindest 0,8 oder zumindest 1. Das Gelenk ist mit Hilfe des Spannelements und des Seilelements vorteilhafterweise zwischen einer Justierstellung mit einem ersten Anpressdruck und einer Fixierstellung mit einem im Vergleich zum ersten Anpressdruck höheren zweiten Anpressdruck überführbar. Der erste Anpressdruck in der Justierstellung kann insbesondere auch im Wesentlichen Null sein. Es können auch mehrere Fixierstellungen mit unterschiedlich hohen Anpressdrücken existieren, die von der Spannung des Seilelements abhängig sind. Die Anzahl an Fixierstellungen hängt von der Art des Spannelements ab. Es kann auch eine quasi unendliche Anzahl von Fixierstellungen existieren, wenn das Spannelement ein kontinuierliches Spannen des Seilelements erlaubt. Bei einem Spannelement mit nur zwei Stellungen kann auch nur eine Justierstellung und eine Fixierstellung existieren. In der Justierstellung sind das erste und das zweite Gelenkteil zueinander verstellbar. In der Fixierstellung sind das erste und das zweite Gelenkteil zueinander fixiert. In der Justierstellung ist der von dem Seilelement erzeugte Anpressdruck zwischen der ersten und der zweiten Kontaktfläche im Vergleich zur Fixierstellung geringer, insbesondere im Wesentlichen Null, und das Kopfelement im Aufnahmeelement daher leichtgängig beweglich. Es kann vorgesehen sein, dass das Seilelement in der Justierstellung völlig entspannt, d.h. entlastet, ist, sodass kein Anpressdruck zwischen den Kontaktflächen durch das Seilelement und das Spannelement erzeugt wird. In der Fixierstellung ist der von dem Seilelement erzeugte Anpressdruck jedenfalls höher als in der Justierstellung und das Kopfelement im Aufnahmeelement daher im Wesentlichen unbeweglich, sofern eine auf das Gelenk einwirkende externe Kraft die durch den zweiten Anpressdruck erzeugte Reibkraft zwischen der ersten und der zweiten Kontaktfläche nicht überwindet. Das Aufnahmeelement des ersten Gelenkteils besitzt vorzugsweise eine nach innen gewölbte Innenfläche mit einem vorzugsweise runden Querschnitt. Vorzugsweise ist die erste Kontaktfläche durch die Innenfläche des Aufnahmeelements gebildet. In einer Ausführungsform besitzt die erste Kontaktfläche zumindest teilweise im Wesentlichen die Form einer Kugeloberfläche oder einer Zylindermantelfläche. In einer ganz bevorzugten Ausführungsform besitzt die erste Kontaktfläche, bis auf allfällige Durchtrittsöffnungen für das Seilelement, zumindest die Form einer Oberfläche einer Halbkugel. Das Kopfelement des zweiten Gelenkteils besitzt vorzugsweise eine nach außen gewölbte Außenfläche mit einem vorzugsweise runden Querschnitt. Vorzugsweise ist die zweite Kontaktfläche durch die Außenfläche des Kopfelements gebildet. In einer Ausführungsform besitzt die zweite Kontaktfläche zumindest teilweise im Wesentlichen die Form einer Kugeloberfläche oder einer Zylindermanteloberfläche. In einer ganz bevorzugten Ausführungsform besitzt die zweite Kontaktfläche, bis auf allfällige Durchtrittsöffnungen für das Seilelement, zumindest die Form einer Oberfläche einer Halbkugel. Im Unterschied zu einer Feder weist das Seilelement eine deutlich niedrigere Elastizität auf. Vorzugsweise ist das Seilelement zwischen 0 % und 15 % bis zu dessen Reiß- bzw. Bruchgrenze dehnbar. Vorzugsweise weist das Seilelement einen E-Modul von zumindest 100 N/mm², vorzugsweise von zumindest 200 N/mm² oder von zumindest 300 N/mm², insbesondere von zumindest 500 N/mm², auf. Als Seilelement im Sinne der Erfindung kann ein Seil, eine Schnur, ein Faden, ein Draht oder ein Drahtseil verstanden werden. Bevorzugt ist, wenn die Dicke des Seilelements geringer als 30 mm ist. Noch mehr bevorzugt ist, wenn die Dicke des Seilelements geringer als 20 mm, geringer als 15 mm, geringer als 10 mm oder geringer als 5 mm ist. Als Material für das Seilelement kann beispielsweise ein Stahl, eine Stahllegierung oder ein insbesondere faserverstärkter Kunststoff vorgesehen sein. Als Fasern eines faserverstärkten Kunststoffes können Polyethylenfasern, Kevlarfasern oder Aramidfasern verwendet werden. Vorzugsweise bestehen das Aufnahmeelement und das Kopfelement aus einem Metall, insbesondere Stahl und Aluminium, oder einem Kunststoff, insbesondere Polyethylen und Polypropylen. Das Aufnahmeelement und das Kopfelement können auch aus dem Verbund zweier oder mehrerer Materialien bestehen. So wäre etwa ein Kopfelement aus Stahl, welches mit einer Schicht aus Gummi überzogen ist, denkbar. Das Kopfelement ist in das Aufnahmeelement eingefügt und vorzugsweise durch Formschluss gehalten. Der Anpressdruck wirkt von der ersten Kontaktfläche auf die zweite Kontaktfläche (und umgekehrt). Der Anpressdruck wirkt zumindest im Wesentlichen in Richtung des gespannten Seilelementes. Das Spannelement ist dazu eingerichtet, das Seilelement zu spannen. Zu diesem Zweck ist das Seilelement mit dem Spannelement verbunden. Das Seilelement kann weiters noch mit einem Endstück der Gelenkverbindung verbunden sein. Die Gelenkverbindung kann mehrere gleichartig aufgebaute Gelenke der beschriebenen Art aufweisen, die miteinander insbesondere über Gelenkarme verbunden sein können. Ausführungen, die sich auf ein Gelenk beziehen, sind auf alle anderen Gelenke der Gelenkverbindung übertragbar. Das Seilelement kann dann durch sämtliche Gelenke geführt sein. Mit der erfindungsgemäßen Gelenkverbindung können beispielsweise Werkzeuge oder Objekte, wie zum Beispiel Lampen oder Bildschirme, gehalten werden.

Zur Montage der Gelenkverbindung, beispielsweise an einem Tisch oder einem anderen Gegenstand, kann die Gelenkverbindung eine Befestigungsvorrichtung aufweisen. Als Befestigungsvorrichtung kann zum Beispiel eine Montageplatte, insbesondere eine Montageplatte mit zumindest einem Befestigungsloch und/oder zumindest einer Befestigungsschraube, oder eine Klemmvorrichtung mit einer Befestigungsklammer dienen. Die Befestigungsvorrichtung kann mit dem Spannelement verbunden sein bzw. das Spannelement kann die Befestigungsvorrichtung aufweisen.

In einer bevorzugten Ausführungsform der Erfindung ist vorgesehen, dass das Kopfelement eine sich verjüngende, insbesondere kegelförmige, Ausnehmung aufweist, die sich vorzugsweise zum geometrischen Mittelpunkt des Kopfelements hin verjüngt. Die Ausnehmung besitzt einen Öffnungswinkel. Der Öffnungswinkel liegt vorzugsweise im Bereich zwischen 5° und 180°, insbesondere im Bereich zwischen 10° und 120° oder zwischen 20° und 90°. Die Ausnehmung kann rotationssymmetrisch, insbesondere kegelförmig, ausgebildet sein, was bei Kugelgelenken von Vorteil ist. Die Ausnehmung kann auch keilförmig ausgebildet sein, was bei Scharniergelenken von Vorteil ist. Die Ausnehmung ist mit einem aufgeweiteten Ende dem Aufnahmeelement zugewandt. Mit dem aufgeweiteten Ende durchbricht die Ausnehmung die zweite Kontaktfläche. Ein verjüngtes Ende der Ausnehmung befindet sich vorzugsweise im Wesentlichen im geometrischen Zentrum des Kopfelements. Das Seilelement verläuft durch die Ausnehmung und durch eine Durchtrittsöffnung in der ersten Kontaktfläche im Aufnahmeelement. Durch die sich verjüngende Form der Ausnehmung werden erlaubte Stellungen des Gelenks festgelegt, in denen das Seilelement gerade, d.h. ungebogen, von der Durchtrittsöffnung in der ersten Kontaktfläche des Aufnahmeelements durch die Ausnehmung verläuft und dabei nicht vom Kopfelement abgeknickt wird. Das Seilelement verläuft in der Ausnehmung gerade und wird lediglich im Drehpunkt der Kopfelemente umgelenkt. Dadurch bleibt die Länge des Seilelements, wie noch beschrieben wird, im Wesentlichen unverändert. In einer gerade ausgerichteten (d.h. nicht abgeknickten) Stellung des Gelenks ist die Ausnehmung vorzugsweise symmetrisch um die Längsachse des Gelenks angeordnet. Eine erlaubte Stellung ist eine Stellung, in der die Gelenkelemente maximal um den halben Öffnungswinkel der Ausnehmung zueinander von der gerade ausgerichteten Stellung verdreht sind. Die Länge des Seilelements ist vorteilhafterweise bei einer vorgegebenen, d.h. gleichbleibenden, Einstellung des Spannelements in allen erlaubten Stellungen gleich. Somit wird bei einer vorgegebenen Einstellung des Spannelements die Länge des Seilelements durch Ändern der Gelenkstellung/en in andere erlaubte Stellungen nicht verändert.

Es findet somit, im Unterschied zum Gegenstand der US 3,266,059 A, keine Längenänderung des Seilelements durch Verdrehen der Gelenke statt. Somit ist auch die Zugkraft des Seilelements und damit der Anpressdruck in allen erlaubten Stellungen bei vorgegebener Einstellung des Spannelements gleich. Dies hat den Vorteil, dass das Spannelement zum Spannen des Seilelements in den erlaubten Stellungen immer in die gleiche Einstellung gebracht werden kann und in dieser Einstellung die Zugkraft des Seilelements in den erlaubten Stellungen immer gleich ist. Ein Benutzer kann somit den Anpressdruck zwischen den Kontaktflächen in jeder erlaubten Stellung und damit die Haltewirkung der Gelenkverbindung leicht abschätzen. Dadurch, dass die Länge des Seilelements bei vorgegebener Einstellung des Spannelements in den erlaubten Stellungen gleich ist, wird es ermöglicht, dass bei einer vorgegebenen Einstellung und damit einer vorgegebenen Spannung des Seilelements auch der Anpressdruck bei allen erlaubten Stellungen des Gelenks im Wesentlichen gleich ist. Der Anpressdruck zwischen der ersten und der zweiten Kontaktfläche ist bei der erfindungsgemäßen Gelenkverbindung bei allen erlaubten Stellungen im Wesentlichen unabhängig von der Ausrichtung des Gelenks. Der Anpressdruck zwischen der ersten und der zweiten Kontaktfläche ist bei den erlaubten Stellungen nur von der Spannung des Seilelements im Gelenk abhängig. Weiters ist von Vorteil, dass durch die Form der Ausnehmung bei einer Erhöhung der Spannung die Ausrichtung des Gelenks nicht verändert wird.

Bevorzugt ist, wenn ein verjüngtes Ende der Ausnehmung in einem Drehpunkt des Kopfelements liegt. Das verjüngte Ende der Ausnehmung kann in einen Kanal münden, in dem das Seilelement weitergeführt wird.

Gemäß einer Ausführungsform der Erfindung ist vorgesehen, dass das Kopfelement in einem Querschnitt betrachtet zumindest teilweise eine Kreisform aufweist und die sich verjüngende Ausnehmung in dem Querschnitt einen Kreissektor der Kreisform beschreibt. Die Schenkel des Kreissektors sind gerade, d.h. ungebogen. Das Kopfelement kann beispielsweise zumindest teilweise kugelförmig oder zylinderförmig ausgebildet sein.

Bei einer besonders bevorzugten Ausführungsform des Gelenks ist vorgesehen, dass das Kopfelement zumindest teilweise eine Kugelform aufweist und die sich verjüngende Ausnehmung einen Kugelausschnitt der Kugelform beschreibt.

Um beispielsweise Werkzeuge mit der Gelenkverbindung zu verbinden, ist es günstig, wenn an den ersten und/oder zweiten Gelenkteil ein Gelenkarm angefügt ist. Der Gelenkarm kann mit einem Werkzeug verbunden sein oder eine Halteeinrichtung für ein Werkzeug aufweisen. Wenn bei der erfindungsgemäßen Gelenkverbindung mehrere Gelenkarme vorgesehen sind, können diese jeweils gleichartig aufgebaut sein. Zudem können, wenn mehrere Gelenke vorgesehen sind, diese über vorzugsweise gleichartige Gelenkarme miteinander verbunden sein. Insbesondere kann vorgesehen sein, dass ein Gelenkarm mit dem ersten Gelenkteil eines Gelenks und mit dem zweiten Gelenkteil eines weiteren Gelenks verbunden ist. An einen Gelenkarm kann insbesondere an einem Ende ein Kopfelement und an einem anderen Ende ein Aufnahmeelement angefügt sein. Bei Vorhandensein von mehreren Gelenken kann dieser Aufbau in entsprechender Weise fortgesetzt werden. Es kann vorgesehen sein, dass der letzte Gelenkarm in einer Reihe von Gelenkarmen der Gelenkverbindung mit einem Werkzeug verbunden ist oder eine Halteeinrichtung für ein Werkzeug aufweist. Die Halteeinrichtung kann einen Halteflansch besitzen. Als Werkzeug kann beispielsweise ein Greifelement vorgesehen sein. An Stelle eines Werkzeugs kann auch beispielsweise ein Leuchtmittel vorgesehen sein.

Um das Seilelement in der Gelenkverbindung zu führen, kann in dem/den Gelenkarm/en ein im Wesentlichen zentral angeordneter und parallel zu einer Längsachse des Gelenkarms orientierter Kanal vorgesehen sein, in welchem das Seilelement verläuft. Der Kanal kann einen im Wesentlichen kreisrunden Querschnitt besitzen. Der Kanal kann umfangsseitig vollständig geschlossen sein. Vorzugsweise ist der Kanal entlang seiner Längsausdehnung im Wesentlichen gerade, d.h. ungebogen, ausgebildet. Neben dem Seilelement kann in dem Kanal auch ein Energiekabel, ein Datenkabel, ein Betätigungsseilelement zur Betätigung eines Werkzeugs und/oder ein Lichtwellenleiter geführt sein. Dies ist beispielsweise dann vorteilhaft, wenn ein Werkzeug an der Gelenkverbindung befestigt ist, welches eine Energieversorgung benötigt oder mit welchem Daten ausgetauscht werden. Mittels des Betätigungsseilelements kann zum Beispiel ein Greifarm an der Gelenkverbindung betätigt werden. Es ist aber auch möglich, dass der Greifarm mit dem Seilelement verbunden ist und durch Verstellen des Spannelements auch der Greifarm betätigt wird. Wenn mehrere Gelenke vorhanden sind und die Gelenke jeweils über einen Gelenkarm miteinander verbunden sind, kann jeder Gelenkarm einen Kanal aufweisen, durch welchen das Seilelement geführt wird. Alternativ kann vorgesehen sein, dass neben dem Kanal für das Seilelement in dem/den Gelenkarm/en jeweils ein weiterer Kanal für ein Energiekabel, ein Datenkabel, ein Betätigungsseilelement zur Betätigung eines Werkzeugs und/oder ein Lichtwellenleiter vorhanden ist.

Um das Gelenk an die jeweilige Situation, in der es Verwendung finden soll, anzupassen, kann vorgesehen sein, dass der/die Gelenkarme längenveränderbar, insbesondere teleskopierbar, ist/sind. Wenn mehrere Gelenkarme vorgesehen sind, können diese jeweils unterschiedliche Längen, Dicken und/oder Querschnitte aufweisen. Es ist auch denkbar, dass die Gelenkverbindung unterschiedliche Gelenke, insbesondere sowohl Kugelgelenke als auch Scharniergelenke, aufweist.

Um das Seilelement auf besonders einfache Weise zu spannen, kann das verstellbare Spannelement durch eine verdrehbare Hülse mit einem ersten Gewinde, insbesondere einem Innengewinde, gebildet sein, wobei das erste Gewinde in ein zweites Gewinde, insbesondere ein Außengewinde, eingreift, welches zweite Gewinde an einem Haltearm, welcher mit dem ersten oder zweiten Gelenkteil verbunden ist, angeordnet ist. Vorzugsweise ist das zweite Gewinde an einer Außenseite des Haltearms angeordnet. Das Seilelement kann mit der Hülse verbunden sein. Vorzugsweise ist das Seilelement dabei drehbar mit der Hülse verbunden, sodass dieses bei der Verdrehung der Hülse nicht verzwirbelt wird. Die Hülse kann auch eine Befestigungsvorrichtung der oben beschriebenen Art zur Montage der Gelenkverbindung beispielsweise an einem Tisch oder einem anderen Gegenstand aufweisen oder mit einer solchen Befestigungsvorrichtung verbunden sein.

Bei einer Weiterbildung der Erfindung kann vorgesehen sein, dass das verstellbare Spannelement elektrisch, hydraulisch oder pneumatisch verstellbar ist. Beispielsweise kann vorgesehen sein, dass das Spannelement einen elektrischen Motor aufweist, mit dem das Seilelement gespannt werden kann. Es kann auch vorgesehen sein, dass die verdrehbare Hülse von einem elektrischen, pneumatischen oder hydraulischen Motor angetrieben wird. Das Spannelement kann auch einen Hydraulikkolben oder einen Pneumatikkolben innerhalb eines Zylinders aufweisen, mit dem das Seilelement spannbar ist. Der Pneumatikkolben kann durch ein Gas und der Hydraulikkolben durch eine Flüssigkeit aktuiert werden.

Bei einer anderen Ausführungsform ist vorgesehen, dass das verstellbare Spannelement eine Feder aufweist, mittels welcher das Seilelement gespannt wird, wobei durch Krafteinwirkung entgegen einer Federwirkung der Feder, beispielsweise mittels eines vorzugsweise verrastbaren Hebels oder eines Druckknopfes, die Spannung des Seilelements vorrübergehend verringerbar ist. Durch Betätigung des Hebels oder des Druckknopfes kann das Seilelement entspannt werden. Nach Loslassen des Hebels oder des Druckknopfes wird das Seilelement durch die Federwirkung der Feder wieder gespannt.

Um eine bevorzugte Stellung des Gelenks vorzugeben, können am ersten Gelenkteil und am zweiten Gelenkteil jeweils Magneten, insbesondere Permanentmagneten, vorgesehen sein, wobei durch die Anordnung der Magneten eine bevorzugte Stellung des Gelenks definiert ist. Durch die Anordnung der Magneten wird eine bevorzugte Stellung des Gelenks definiert. Das Gelenk ist jedoch nicht auf die bevorzugte Stellung beschränkt. Es kann selbstverständlich auch in andere Stellungen gebracht werden. Die Magneten erleichtern jedoch einem Benutzer das Auffinden der bevorzugten Stellung.

Bei einer Ausführungsform ist vorgesehen, dass das verstellbare Gelenk ein Drehgelenk mit ausschließlich einem, ausschließlich zwei oder ausschließlich drei Freiheitsgraden ist. Ein Gelenk mit ausschließlich einem rotatorischen Freiheitsgrad kann beispielsweise realisiert werden, indem das Gelenk als Scharniergelenk ausgebildet ist.

Gemäß einer Ausführungsform kann eine Halteeinrichtung für ein Werkzeug oder ein Objekt vorgesehen sein. Die Halteeinrichtung kann beispielsweise mit einem Gelenkarm verbunden sein. Wenn mehrere Gelenke vorgesehen sind, kann die Halteeinrichtung mit dem letzten in einer Reihe von Gelenkarmen verbunden sein. Die Halteeinrichtung kann beispielsweise dazu eingerichtet sein, ein Objekt, wie zum Beispiel einen Bildschirm, eine Lampe oder eine Kamera, oder ein Werkzeug zu halten. Die Halteeinrichtung kann zu diesem Zweck beispielsweise einen Halteflansch aufweisen. Die Halteeinrichtung kann zusätzlich oder alternativ zumindest eine Befestigungsklammer, zumindest eine Befestigungsschraube und/oder zumindest ein Befestigungsloch aufweisen.

Bei einer Weiterbildung der Erfindung ist vorgesehen, dass zumindest zwei Gelenke vorgesehen sind, die über einen Gelenkarm miteinander verbunden sind und durch deren erste und zweite Kontaktflächen das Seilelement geführt ist. Die Gelenke weisen jeweils ein erstes Gelenkteil und ein zweites Gelenkteil sowie erste und zweite Kontaktflächen auf. Das Seilelement ist durch die ersten und zweiten Kontaktflächen der Gelenke geführt. Das Spannelement ist zum Spannen des Seilelements vorgesehen, sodass ein Anpressdruck zwischen den ersten und den zweiten Kontaktflächen gleichzeitig einstellbar ist. Vorzugsweise ist ein erstes Gelenkteil eines Gelenks über einen Gelenkarm mit einem zweiten Gelenkteil eines weiteren Gelenks verbunden. Bei mehr als zwei Gelenken ist dieses Prinzip auf alle Gelenke erweiterbar. Das Seilelement ist durch sämtliche Gelenke und deren Kontaktflächen geführt. Es können selbstverständlich auch mehr als zwei Gelenke vorgesehen sein. Die Gelenke können alle die gleiche oder eine unterschiedliche Anzahl an Freiheitsgraden aufweisen. Dadurch, dass das Seilelement durch alle Gelenke geführt ist, kann der Anpressdruck zwischen den Kontaktflächen in allen Gelenken gleichzeitig mit dem Spannelement eingestellt werden.

Im Folgenden wird die Erfindung an Hand von Ausführungsbeispielen beschrieben, auf die sie allerdings nicht beschränkt sein soll.

### Es zeigen:

Fig. 1 eine erfindungsgemäße Gelenkverbindung gemäß einer ersten Ausführungsform in einer geschnittenen Darstellung;
Fig. 2 eine Schrägansicht der Gelenkverbindung gemäß Fig. 1;
Fig. 3 eine weitere Ansicht der Gelenkverbindung gemäß Fig. 1 von vorne;
Fig. 4 eine erfindungsgemäße Gelenkverbindung gemäß einer zweiten Ausführungsform in einer geschnittenen Darstellung;
Fig. 5 eine Schrägansicht der Gelenkverbindung gemäß Fig. 4;
Fig. 6 eine erfindungsgemäße Gelenkverbindung gemäß einer dritten Ausführungsform in einer geschnittenen Darstellung; und
Fig. 7 eine Schrägansicht der Gelenkverbindung gemäß Fig. 6; und
Fig. 8 zeigt eine erfindungsgemäße Gelenkverbindung gemäß einer vierten Ausführungsform.

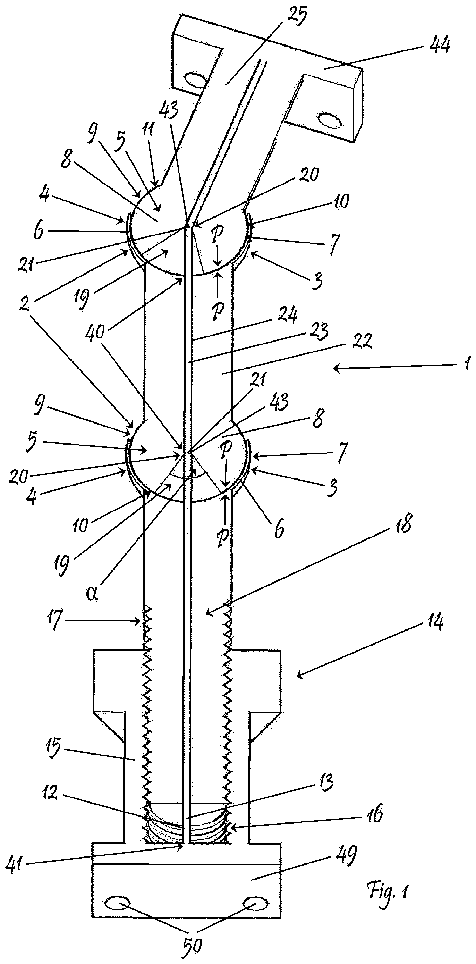

Fig. 1 zeigt eine geschnittene Darstellung einer erfindungsgemäßen Gelenkverbindung 1 mit zwei Gelenken 2. Die Gelenke 2 sind bei dieser Ausführungsform als Kugelgelenke 3 ausgebildet, die jeweils drei rotatorische Freiheitsgrade besitzen. Jedes Gelenk 2 besitzt ein erstes Gelenkteil 4 und ein zweites Gelenkteil 5. Das erste Gelenkteil 4 weist ein Aufnahmeelement 6 mit einer konkav gewölbten ersten Kontaktfläche 7 auf, in welches ein im Wesentlichen kugelförmiges Kopfelement 8 mit einer konvex gewölbten zweiten Kontaktfläche 9 aufgenommen ist. Die erste Kontaktfläche 7 wird durch eine Innenfläche 10 des Aufnahmeelements 6 gebildet. Die zweite Kontaktfläche 9 wird durch eine Außenfläche 11 des Kopfelements 8 gebildet. Die erste 7 und die zweite Kontaktfläche 9 sind zumindest teilweise im Wesentlichen kugelförmig gewölbt. Der Wölbungsradius der ersten Kontaktfläche 7 entspricht im Wesentlichen dem Wölbungsradius der zweiten Kontaktfläche.

Durch die ersten Kontaktflächen 7 und die zweiten Kontaktflächen 9 der Gelenke 2 ist ein Seilelement 13 in Form einer Schnur 12 geführt. Um das Seilelement 13 durchzuführen, besitzen die ersten 7 und die zweiten Kontaktflächen 9 jeweils Durchtrittsöffnungen 40. Das Seilelement 13 kann durch ein Spannelement 14 gespannt werden. Das Spannelement 14 ist in der gezeigten Ausführungsform durch eine verdrehbare Hülse 15 mit einem Innengewinde 16 gebildet, welches in ein Außengewinde 17 an einem Haltearm 18 eingreift. Die verdrehbare Hülse 15 kann als Griff für die Gelenkverbindung 1 benutzt werden. Der Haltearm 18 ist mit dem ersten Gelenkteil 4 des ersten Gelenks 2 in der Reihe von Gelenken 2 verbunden. Das Seilelement 13 ist mit dem Spannelement 14 an einem Endbereich 41 der Hülse 15 vorzugsweise drehbar verbunden. An der Hülse 15 kann eine Befestigungsvorrichtung 49 zur Montage der Gelenkverbindung 1 beispielsweise an einem Tisch vorgesehen sein. Die Befestigungsvorrichtung 49 ist in der gezeigten Ausführungsform eine Montageplatte mit Befestigungslöchern 50. Durch Verdrehen der Hülse 15 kann die Spannung des Seilelements 13 verändert werden. Das Spannelement 14 und das Seilelement 13 ermöglichen es, einen Anpressdruck P zwischen den ersten 7 und den zweiten Kontaktflächen 9 der Gelenke 2 gleichzeitig einzustellen. Dadurch können die Gelenke 2 gleichzeitig zwischen einer Justierstellung mit einem ersten Anpressdruck P und einer Fixierstellung mit einem im Vergleich zum ersten Anpressdruck P höheren zweiten Anpressdruck P überführt werden. In der Justierstellung sind die ersten 4 und die zweiten Gelenkteile 5 zueinander verstellbar. In der Fixierstellung sind die ersten 4 und die zweiten Gelenkteile 5 zueinander fixiert, sodass diese unbeweglich sind (sofern die durch den Anpressdruck P erzeugte Reibkraft zwischen den Kontaktflächen 7, 9 nicht durch externe Kräfte überwunden wird). In der Justierstellung ist der vom Seilelement 13 erzeugte Anpressdruck P zwischen den Kontaktflächen 7, 9 im Vergleich zur Fixierstellung geringer, vorzugsweise Null, und das Kopfelement 8 im Aufnahmeelement 6 daher leichtgängig beweglich. In der Fixierstellung ist der von dem Seilelement 13 erzeugte Anpressdruck P höher als in der Justierstellung und das Kopfelement 8 im Aufnahmeelement 6 daher im Wesentlichen unbeweglich, sofern die aufgewendete Kraft die durch den zweiten Anpressdruck erzeugte Reibkraft zwischen den beiden Kontaktflächen 7, 9 nicht überwindet.

Die Kopfelemente 8 der Gelenke 2 weisen jeweils als Durchtrittsöffnung 40 eine sich verjüngende Ausnehmung 19 auf, durch welche das Seilelement 13 geführt ist. Die Ausnehmungen 19 verjüngen sich jeweils in Richtung der geometrischen Zentren 43 der Kopfelemente 8. Die Ausnehmungen 19 sind in der gezeigten Ausführungsform im Wesentlichen kegelförmig und beschreiben jeweils einen Kugelausschnitt bzw. Kugelsektor des jeweiligen kugelförmigen Kopfelements 8. Die verjüngten Enden 20 der Ausnehmungen 19 liegen im Wesentlichen in den Drehpunkten 21 der Kopfelemente 8, die im Wesentlichen auch den geometrischen Zentren 43 der Kopfelemente 8 entsprechen. Durch die Öffnungswinkel α der Ausnehmungen 19 werden erlaubte Stellungen der Gelenke 2 festgelegt, in denen das Seilelement 13 gerade, d.h. ungebogen, von den Durchtrittsöffnungen 40 in den Aufnahmeelementen 6 durch die Ausnehmung 19 verläuft und dabei nicht von den Kopfelementen 8 abgeknickt wird. Nur an den verjüngten Enden 20 der Ausnehmungen 19, also an den Drehpunkten 21, wird das Seilelement 13 umgelenkt. Zwischen den Drehpunkten 21 der Kopfelemente 8 verläuft das Seilelement 13 gerade und wird nicht geknickt oder umgelenkt. Eine Umlenkung des Seilelements 13 findet, wie bereits erwähnt, lediglich in den Drehpunkten 21 der Kopfelemente 8 statt. Eine erlaubte Stellung ist eine Stellung, in der die Gelenkelemente 4, 5 maximal um den halben Öffnungswinkel α der Ausnehmung 19 zueinander verdreht sind. Die Länge des Seilelements 13 ist vorteilhafterweise bei einer vorgegebenen, d.h. gleichbleibenden, Einstellung des Spannelements 14 in allen erlaubten Stellungen der Gelenke 2 gleich. Somit wird bei einer vorgegebenen Einstellung des Spannelements die Länge des Seilelements 13 durch Ändern der Gelenkstellung/en in andere erlaubte Stellungen nicht verändert. Dadurch wird es ermöglicht, dass bei einer vorgegebenen Spannung des Seilelements 13 der Anpressdruck P bei allen erlaubten Stellungen der Gelenke 2 im Wesentlichen gleich ist. Der Anpressdruck P zwischen den ersten 7 und den zweiten Kontaktflächen 9 ist bei der Gelenkverbindung 1 somit bei allen erlaubten Stellungen nicht von der Ausrichtung der Gelenke 2, sondern nur von der Spannung des Seilelements 13 durch das Spannelement 14 abhängig. Vorteilhafterweise muss das Spannelement 14 somit nicht je nach Stellung der Gelenke 2 unterschiedlich eingestellt werden.

Die Gelenke 2 sind über insbesondere gerade Gelenkarme 22 miteinander verbunden. Ein Gelenkarm 22 verbindet ein erstes Gelenkteil 4 eines Gelenks 2 mit einem zweiten Gelenkteil 5 eines weiteren Gelenks 2 und so fort. Jeder Gelenkarm 22 weist im Inneren parallel zu seiner Längsachse 23 einen Kanal 24 für das Seilelement 13 auf. Am letzten Gelenkarm 25 in der Reihe von Gelenkarmen 22 kann ein Objekt (nicht gezeigt), insbesondere ein Werkzeug, angeordnet sein. In Fig. 1 weist die Gelenkvorrichtung am letzten Gelenkarm 25 zur Befestigung eines Objekts oder Werkzeugs eine Halteeinrichtung 44 auf, die einen Halteflansch mit Befestigungslöchern besitzt. Um das Objekt mit elektrischer Energie zu versorgen, das Objekt zu Betätigen oder Daten mit dem Objekt auszutauschen, kann vorgesehen sein, dass in den Kanälen 24 in den Gelenkarmen 22 ein Energiekabel, ein Datenkabel, ein Betätigungsseil oder ein Lichtwellenleiter geführt wird. Alternativ können zur Führung eines Energiekabels, eines Datenkabels, eines Betätigungsseils und/oder eines Lichtwellenleiters auch weitere Kanäle in den Gelenkarmen 22 vorgesehen sein.

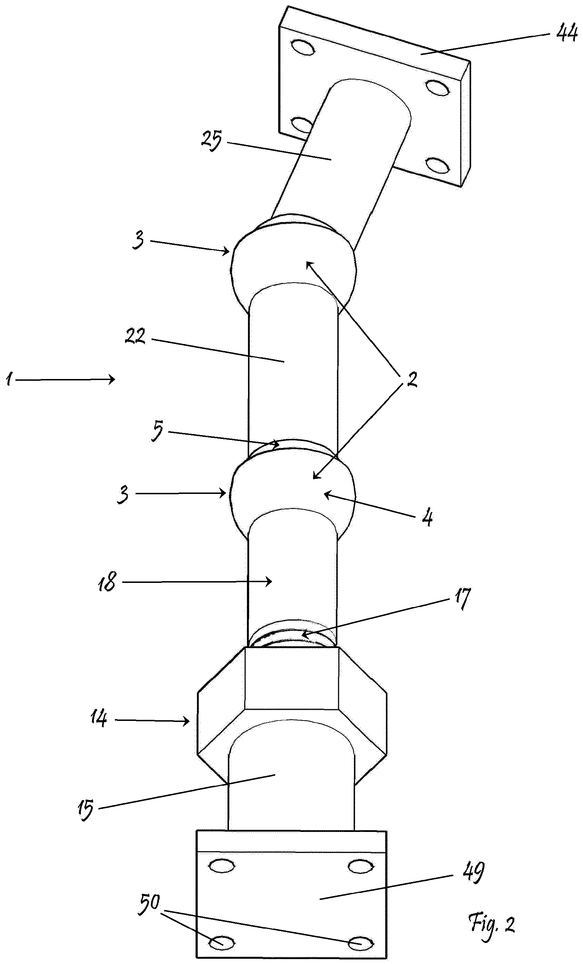

Fig. 2 zeigt die Gelenkverbindung gemäß Fig. 1 in einer seitlichen Ansicht.

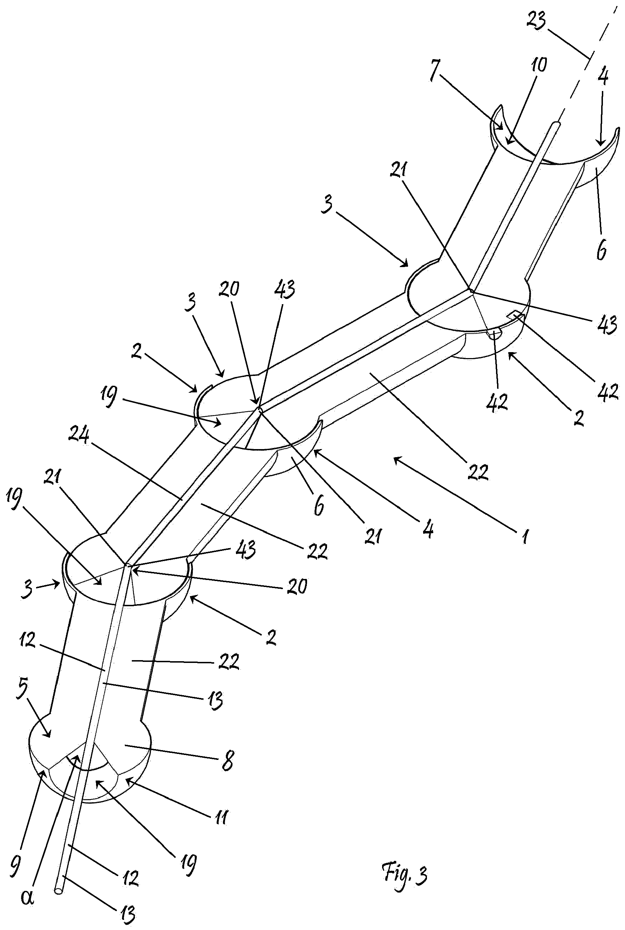

Fig. 3 zeigt die Ausführungsform gemäß Fig. 1 mit Blick auf eine sich verjüngende Ausnehmung 19 eines Kopfelements 8. Die Gelenkteile 4, 5, insbesondere die Kopfteile 8 und die Aufnahmeteile 6 bzw. auch die Gelenkarme 22, können Magneten 42, insbesondere Permanentmagneten, aufweisen, durch deren Anordnung eine bevorzugte Stellung der Gelenke 2 vorgeben wird.

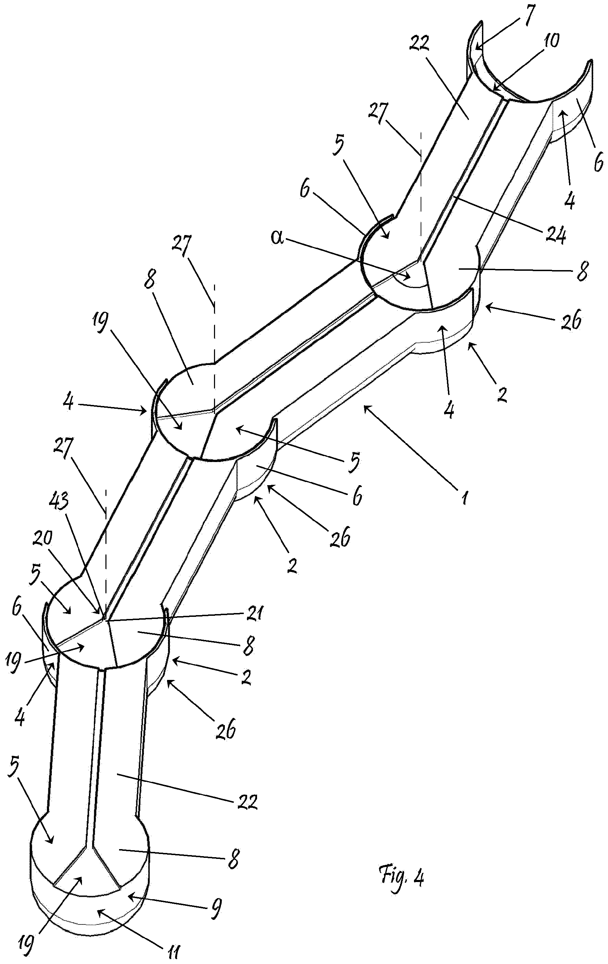

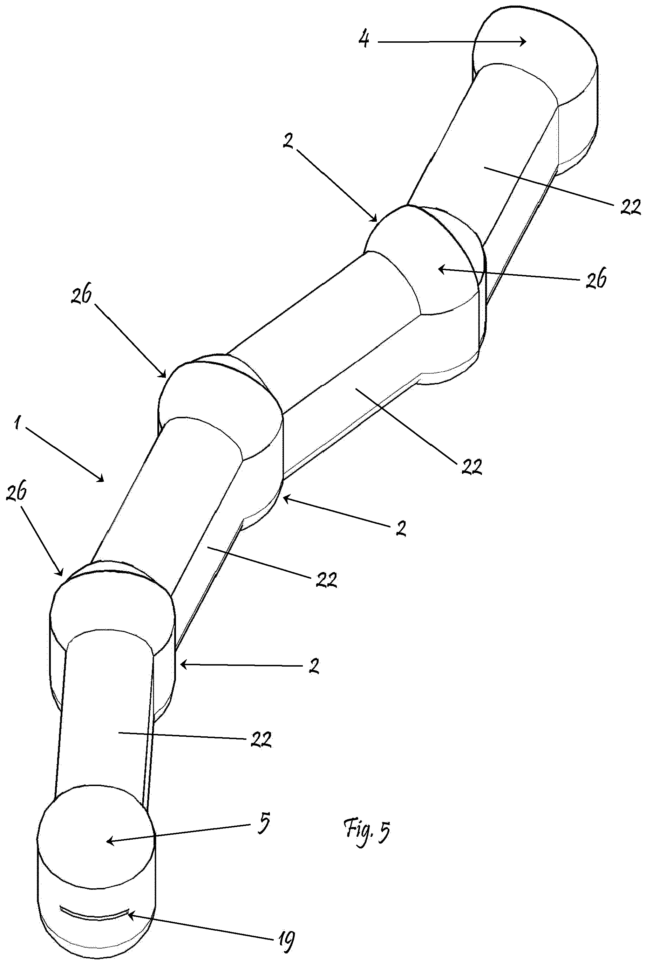

Fig. 4 und Fig. 5 zeigen eine alternative Ausführungsform der erfindungsgemäßen Gelenkverbindung 1. Hierbei sind die Gelenke 2 als Scharniergelenke 26 mit ausschließlich einem Freiheitsgrad ausgebildet. Die ersten 7 und die zweiten Kontaktflächen 9 besitzen zumindest teilweise die Form einer Zylindermantelfläche. Die Gelenkachsen 27 der Gelenke 2 sind alle parallel zueinander angeordnet. Es ist aber auch denkbar, dass die Gelenkachsen 27 in unterschiedliche Raumrichtungen weisen.

Es ist möglich, dass eine Gelenkverbindung 1 sowohl Kugelgelenke 3, als auch Scharniergelenke 26 aufweist.

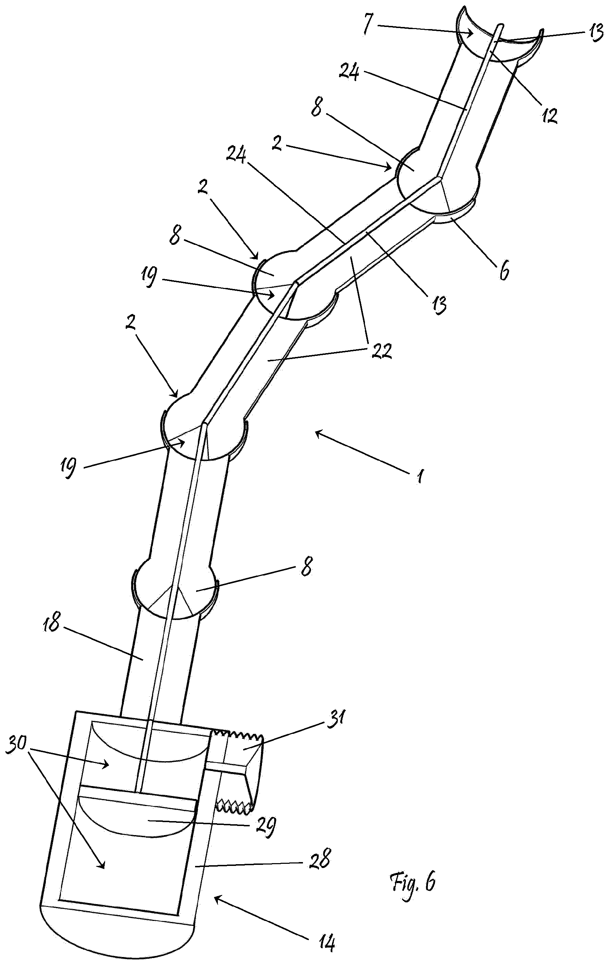

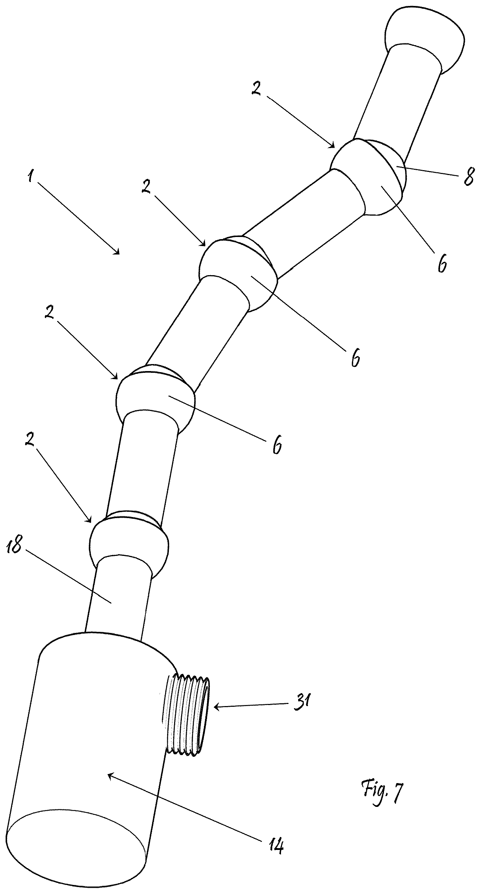

Fig. 6 und Fig. 7 zeigen eine weitere Ausführungsform der Erfindung, die sich von der Ausführungsform gemäß Fig. 1-3 durch ein andersartiges Spannelement 14 unterscheidet. Im Folgenden wird daher lediglich auf die Unterschiede zu der Ausführungsform gemäß Fig. 1-3 eingegangen.

Das Spannelement 14 weist in der Ausführungsform gemäß Fig. 6 und Fig. 7 einen Zylinder 28 mit einem darin beweglich angeordneten Kolben 29 auf, der den Zylinder 28 in zwei Kammern 30 unterteilt. Der Kolben 29 ist in der gezeigten Darstellung zum Spannen des Seilelements 13 direkt mit dem Seilelement 13 verbunden. Es ist aber zum Zwecke der besseren Abdichtung auch möglich, das Seilelement 13 mit einer am Kolben 29 befestigten Kolbenstange (nicht gezeigt) zu verbinden, die aus dem Zylinder 28 geführt wird. Zum Verstellen des Kolbens 29 kann über einen oder mehrere Einlässe 31 ein Pneumatikgas oder eine Hydraulikflüssigkeit eingelassen oder abgelassen werden. Durch Verschiebung des Kolbens 29 innerhalb des Zylinders 28 wird das Seilelement 13 gespannt bzw. entspannt.

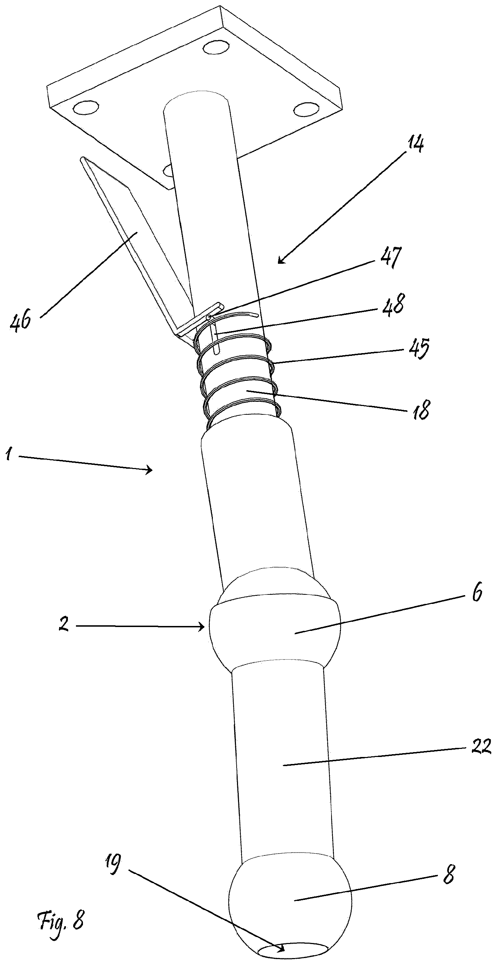

Fig. 8 zeigt eine weitere Ausführungsform der Erfindung, bei der das Spannelement 14 eine Feder 45 aufweist, mittels welcher das Seilelement 13 vorgespannt wird. Das Seilelement 13 kann innerhalb des Haltearms 18 an einem verschiebbaren Zapfen 47 befestigt sein, der durch die Feder 45 in eine vorgespannte Lage gedrückt wird und in der gezeigten Ausführungsform in zwei gegenüberliegenden Langlöchern 48 im Haltearm 18 geführt wird. Durch Krafteinwirkung entgegen der Federwirkung der Feder 45, im gezeigten Ausführungsbeispiel mittels eines Hebels 46, kann die Spannung des Seilelements 13 durch Verschiebung des Zapfens 47 entgegen der Federkraft vorrübergehend verringert werden. Dadurch wird der Anpressdruck zwischen den Kontaktflächen 7, 9 aller Gelenke 2 gleichzeitig verringert. Nach Loslassen des Hebels 46 wird der Zapfen durch die Federwirkung der Feder 45 wieder in die vorgespannte Lage gebracht und das Seilelement 13 somit wieder gespannt.

## Patentansprüche

1. Gelenkverbindung (1) mit zumindest einem verstellbaren Gelenk (2), insbesondere einem Kugelgelenk (3) oder einem Scharniergelenk (26), wobei das zumindest eine Gelenk (2) aufweist:
ein erstes Gelenkteil (4) mit einem Aufnahmeelement (6), das eine vorzugsweise konkav gewölbte erste Kontaktfläche (7) besitzt;
ein zweites Gelenkteil (5) mit einem in das Aufnahmeelement (6) aufgenommenen Kopfelement (8), welches eine vorzugsweise konvex gewölbte zweite Kontaktfläche (9) besitzt, die von der ersten Kontaktfläche (7) zumindest teilweise umgeben ist;
**dadurch gekennzeichnet, dass** ein Seilelement (13) durch die erste (7) und die zweite Kontaktfläche (8) geführt ist und ein verstellbares Spannelement (14) zum Spannen des Seilelements (13) vorgesehen ist, sodass ein Anpressdruck (P) zwischen der ersten (7) und der zweiten Kontaktfläche (9) einstellbar ist.

2. Gelenkverbindung (1) nach Anspruch 1, **dadurch gekennzeichnet, dass** das Kopfelement (8) eine sich verjüngende, insbesondere kegelförmige, Ausnehmung (19) aufweist, die sich vorzugsweise zum geometrischen Mittelpunkt (43) des Kopfelements (8) hin verjüngt.

3. Gelenkverbindung (1) nach Anspruch 2, **dadurch gekennzeichnet, dass** ein verjüngtes Ende (20) der Ausnehmung (19) in einem Drehpunkt (21) des Kopfelements (8) liegt.

4. Gelenkverbindung (1) nach Anspruch 2 oder 3, **dadurch gekennzeichnet, dass** das Kopfelement (8) in einem Querschnitt betrachtet zumindest teilweise eine Kreisform aufweist und die sich verjüngende Ausnehmung (19) in dem Querschnitt im Wesentlichen einen Kreissektor der Kreisform beschreibt.

5. Gelenkverbindung (1) nach einem der Ansprüche 2 bis 4, **dadurch gekennzeichnet, dass** das Kopfelement (8) zumindest teilweise eine Kugelform aufweist und die sich verjüngende Ausnehmung (19) im Wesentlichen einen Kugelausschnitt der Kugelform beschreibt.

6. Gelenkverbindung (1) nach einem der Ansprüche 1 bis 5, **dadurch gekennzeichnet, dass** an den ersten (4) und/oder zweiten Gelenkteil (5) ein Gelenkarm (22) angefügt ist.

7. Gelenkverbindung (1) nach Anspruch 6, **dadurch gekennzeichnet, dass** in dem/den Gelenkarm/en (22) ein im Wesentlichen zentral angeordneter und parallel zu einer Längsachse (23) des jeweiligen Gelenkarms (22) orientierter Kanal (24) vorgesehen ist, in welchem das Seilelement (13) verläuft, vorzugsweise wobei in dem Kanal (24) oder in einem weiteren Kanal ein Energiekabel, ein weiteres Betätigungsseilelement zur Betätigung eines Werkzeugs, ein Datenkabel und/oder ein Lichtwellenleiter geführt ist.

8. Gelenkverbindung (1) nach einem der Ansprüche 6 oder 7, **dadurch gekennzeichnet, dass** der/die Gelenkarme (22) längenveränderbar, insbesondere teleskopierbar, ist/sind.

9. Gelenkverbindung (1) nach einem der Ansprüche 1 bis 8, **dadurch gekennzeichnet, dass** das verstellbare Spannelement (14) durch eine verdrehbare Hülse (15) mit einem ersten Gewinde, insbesondere einem Innengewinde (16), gebildet ist, wobei das erste Gewinde in ein zweites Gewinde, insbesondere ein Außengewinde (17), eingreift, welches zweite Gewinde an einem Haltearm (18), welcher mit dem ersten (4) oder dem zweiten Gelenkteil (5) verbunden ist, angeordnet ist.

10. Gelenkverbindung (1) nach einem der Ansprüche 1 bis 9, **dadurch gekennzeichnet, dass** das verstellbare Spannelement (14) elektrisch, hydraulisch oder pneumatisch verstellbar ist.

11. Gelenkverbindung (1) nach einem der Ansprüche 1 bis 10, **dadurch gekennzeichnet, dass** das verstellbare Spannelement (14) eine Feder aufweist, mittels welcher das Seilelement (13) gespannt wird, wobei durch Krafteinwirkung entgegen einer Federwirkung der Feder, beispielsweise mittels eines vorzugsweise verrastbaren Hebels oder eines Druckknopfes, die Spannung des Seilelements (13) verringerbar ist.

12. Gelenkverbindung (1) nach einem der Ansprüche 1 bis 11, **dadurch gekennzeichnet, dass** am ersten Gelenkteil (4) und am zweiten Gelenkteil (5) jeweils Magneten (42), insbesondere Permanentmagneten, vorgesehen sind, wobei durch die Anordnung der Magneten (42) eine bevorzugte Stellung des Gelenks (2) definiert ist.

13. Gelenkverbindung (1) nach einem der Ansprüche 1 oder 12, **dadurch gekennzeichnet, dass** das zumindest eine verstellbare Gelenk (2) ein Drehgelenk mit ausschließlich einem, ausschließlich zwei oder ausschließlich drei Freiheitsgraden ist.

14. Gelenkverbindung (1) nach einem der Ansprüche 1 bis 13, **dadurch gekennzeichnet, dass** eine Halteeinrichtung (44), insbesondere mit einem Halteflansch, für ein Werkzeug oder ein Objekt vorgesehen ist.

15. Gelenkverbindung (1) nach einem der Ansprüche 1 bis 14, **dadurch gekennzeichnet, dass** zumindest zwei Gelenke (2) vorgesehen sind, die über einen Gelenkarm (22) miteinander verbunden sind und durch deren erste (7) und zweite Kontaktflächen (9) das Seilelement (13) geführt ist.
